Europäisches Patentamt

European Patent Office

Office européen des brevets

(19)

(11) EP 0 963 086 A2

(12) **EUROPEAN PATENT APPLICATION**

(43) Date of publication:
08.12.1999 Bulletin 1999/49

(51) Int Cl.6: **H04L 27/26**

(21) Application number: 99304261.3

(22) Date of filing: 01.06.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 02.06.1998 JP 15243098

(71) Applicants:
• **Advanced Digital Television Broadcasting Laboratory Tokyo (JP)**
• **KABUSHIKI KAISHA TOSHIBA Kawasaki-shi, Kanagawa-ken 210-8572 (JP)**

(72) Inventors:
• **Aizawa, Masami 2-8 Akasaka 5-Chome, Minato-ku, Tokyo (JP)**
• **Tsuboi, Hidenori, c/o Multimedia Engineering Lab., Isogo-ku, Yokohama-shi (JP)**

(74) Representative: **Marles, Alan David Stevens, Hewlett & Perkins 1 St Augustine's Place Bristol BS1 4UD (GB)**

(54) **Error correcting apparatus for dealing with frequency selective noise**

(57) When there is an interference by frequency selective noise, the gain of a particular carrier drops, but the amplitude of the carrier is returned to its usual value by equalization. At this time, however, the C/N value of the carrier degrades, and therefore its dispersion value increases. Accordingly, concerning dispersion values along the frequency axis, it is understood that the carrier with a high dispersion value is interrupted by frequency selective noise. In light of this, the dispersion value of each carrier is calculated from a corresponding demodulation output of a noise detecting section (9), thereby determining, from the dispersion value, the carrier interrupted by frequency selective noise, then weighting the demodulated signal of the carrier, and performing error correction such as erasure decoding by an error correcting section (8). As a result, even when there is an interference by frequency selective noise, effective error correction can be performed to thereby enhance the characteristics of a receiving system.

FIG. 1

## Description

This invention relates to an error correcting apparatus for use in a system like an OFDM (Orthogonal Frequency Division Multiplex) system for receiving a signal obtained by frequency-division multiplexing using carriers, said apparatus shows its correction capacity to the full when a received signal is interrupted by frequency selective noise (e.g. spurious noise, multipass, noise due to interference by an identical or co-channel (close channel)), which may degrade the demodulation performance of the receiving system.

In ground wave digital television broadcasting, the OFDM system is considered as one of the optimal digital transmission systems. The OFDM system performs modulation and demodulation by assigning data to a plurality of orthogonal carriers. This system is characterized in that on the transmission side, IFFT (Inverse Fast Fourier Transform) is executed for converting a frequency-domain signal into a time-domain signal, while on the receiving side, FFT (Fast Fourier Transform) is executed for returning the time-domain signal to the frequency-domain signal.

In the above OFDM system, any optional modulation system can be applied to each carrier. For example, QAM transmission using synchronism detection or using delay detection can be performed. In the case of synchronism detection, a pilot signal is cyclically inserted on the transmission side, while the amplitude/phase difference between the pilot signal and a received signal is calculated on the receiving side, thereby performing amplitude/phase equalization of the received signal. In the delay detection, differential encoding is performed between received symbols, thereby demodulating a received signal without reproducing its carriers.

A reflected wave called a multipass exists in a transmission pass. If the level of the reflected wave is high, the direct wave and the reflected wave offset each other in phase, thereby reducing the reception level of a particular carrier. Further, if there is spurious noise, or if there is an identical or co-channel of an analog television broadcast to that of a digital television broadcast, the reception level of a particular carrier will greatly change.

In digital transmission, error correction is indispensable in order to prevent signal degradation or enhance the transmission characteristics on the transmission line. To this end, the conventional error correcting apparatuses for use in an OFDM receiving apparatus perform error correction using signals that are transmitted by all carriers. Accordingly, even when only a particular carrier is greatly interrupted by the aforementioned multipass, spurious noise or noise due to interference by an identical or co-channel, error correction is performed using the signals which include a signal transmitted by the interrupted carrier. As a result, the characteristics of the entire OFDM receiving system will degrade because of the signal carried by the interrupted carrier. This problem will occur in any other receiving systems that receive frequency-division multiplex signals.

The present invention has been developed to solve the above-described problem, and is aimed at providing an error correcting apparatus for use in a receiving system for receiving frequency-division multiplex signals, which can perform effective error correction to thereby enhance the characteristics of the receiving system, even when frequency selective noise occurs in the system.

According to a first aspect of the invention, there is provided an error correcting apparatus for use in a receiving system which receives a frequency-division multiplex transmission signal obtained by modulating a plurality of carriers with different frequencies generated in a transmission band, using information signals assigned to the carriers, the system then subjecting the transmission signal to orthogonal detection, and demodulating, from an orthogonal detection output, the information signals assigned to the carriers, the error correcting apparatus subjecting the demodulated information signals to error correction, comprising: noise detecting means for measuring a distance between each demodulated information signal assigned to a corresponding one of the carriers and a corresponding representative received symbol, integrating the demodulated information signal along a time axis to calculate a degree of dispersion of the demodulated information signal, detecting a C/N value of each carrier from the degree of dispersion, detecting, from C/N detection results, the one of the carriers which is interrupted by frequency selective noise, and determining, from the degree of dispersion, a degree of reliability of the demodulated information signal of the one of the carriers; and error correcting means for performing soft-decision in which the demodulated information signals of the carries are weighted gradually on the basis of reliability determination results of the noise detecting means, and performing error correction on the basis of a soft-decision result.

According to a second aspect of the invention, there is provided an error correcting apparatus for use in a receiving system which receives a frequency-division multiplex transmission signal obtained by modulating a plurality of carriers with different frequencies generated in a transmission band, using information signals assigned to the carriers and including known pilot signals, the system then subjecting the transmission signal to orthogonal detection, and demodulating, from an orthogonal detection output, the information signals assigned to the carriers and including the known pilot signals, the error correcting apparatus subjecting the demodulated information signals to error correction, comprising: noise detecting means for extracting the pilot signals from the demodulated information signals of the carriers, detecting, from amplitude levels of the pilot signals, the one of the carriers which is interrupted by frequency selective noise, calculating a degree of dispersion of the demodulated information signal of the one of the carriers, and determining, from the degree of dispersion, a degree of reliability of the demodulated information signal of the one of the carriers; and error correcting means for performing soft-decision in which the demodulated information signals of the carries are weighted gradually on the basis of reliability determination results of the noise detecting means, and performing error correction on the basis of a soft-decision result.

In the structure according to the first or second aspect, a carrier that is interrupted by frequency selective noise is detected, and the reliability degree of the demodulated signal of the carrier is determined. The demodulated signal is modified on the basis of the determination result, and error correction is performed using demodulated signals of a high reliability resulting from the modification. As a result, the entire error correcting function of the apparatus is enhanced.

Preferably, when in the structure according to the first aspect, the information signals to be transmitted by the frequency-division multiplex transmission signal selectively include a known pilot signal, the noise detecting means comprises: pilot signal determining means for determining whether or not each of the carriers includes the pilot signal; first detecting means for extracting the pilot signal when the pilot signal determining means has determined that there is the pilot signal, and determining, from an amplitude level of the pilot signal, whether or not the one of the carriers which includes the pilot signal is interrupted by noise; and second detecting means for measuring a distance between the demodulated information signal of each of the carriers and a corresponding representative received symbol, integrating the demodulated information signal along a time axis to calculate a degree of dispersion of the demodulated information signal, detecting a C/N value of the each carrier from the degree of dispersion, and detecting, from C/N detection results, the one of the carriers which is interrupted by frequency selective noise, when the pilot signal determining means has determined that there is no pilot signal, and a degree of reliability of the demodulated information signal of the one of the carriers detected by the first and second detecting means is determined from the degree of dispersion.

More preferably, when in the structure according to the first aspect, it is known in advance that a band of an analog television signal overlaps with the transmission band of the frequency-division multiplex signal, the noise detecting means designates the one of the carriers which is included in the overlapping transmission band, calculates a degree of dispersion of the demodulated information signal of the one of the carriers, and determines, from the degree of dispersion, a degree of reliability of the demodulated information signal of the one carrier.

Also preferably, in the structure according to the first aspect, the noise detecting means calculates an average value of dispersion along a frequency axis, and the error correcting means performs gradual erasure decoding on the one of the demodulated information signals which has a degree of dispersion higher than the average value.

Preferably, in the structure according to the first aspect, the noise detecting means calculates a minimum value of dispersion along a frequency axis, and the error correcting means performs gradual erasure decoding on the one of the demodulated information signals which has a degree of dispersion higher than the minimum value.

Further preferably, when performing the erasure decoding based on the degree of dispersion, the error correcting means controls an amount of erasure so that the amount of erasure will not exceed a predetermined rate.

Yet further preferably, when controlling the amount of erasure so that the amount of erasure will not exceed the predetermined rate, the error correcting means controls the predetermined rate using an encoding rate of the information signal of a corresponding carrier.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram illustrating the structure of an OFDM receiving system that incorporates an error correcting apparatus according to an embodiment of the invention;

FIG. 2 is a graph illustrating spectral characteristics of an OFDM signal in a digital broadcasting band;

FIG. 3 is a graph of spectral characteristics of a received OFDM signal, illustrating a state in which the OFDM signal has dips in amplitude at predetermined frequencies where the channel of an analog television broadcasting signal is superposed on that of the OFDM signal;

FIG. 4 is a graph of spectral characteristics of a received OFDM signal, illustrating a state in which the OFDM signal has dips in amplitude at regular frequency intervals where a multipass exists in the transmission line;

FIG. 5 is a graph of spectral characteristics, illustrating a state in which the received OFDM signal shown in FIG. 4 has different C/N values between different carriers after it is equalized using a pilot signal for synchronism detection, or returned to its original spectrum by delay detection;

FIG. 6 is a view showing an example of soft-decision decoding used in demodulation processing which is performed in an OFDM signal receiving apparatus;

FIG. 7 is a view illustrating carrier dispersion obtained in a noise detecting section employed in the embodiment of FIG. 1;

FIG. 8 is a block diagram showing a specific structure of the noise detecting section;

FIG. 9 is a view useful in explaining an error correcting method used in the embodiment;

FIG. 10 is a view useful in explaining another error correcting method used in the embodiment;

FIG. 11 is a block diagram showing another embodiment which includes, in hierarchical transmission, both the case of using a pilot signal and the case of using no pilot signal;

FIG. 12 is a block diagram showing a specific structure of a noise detecting section appearing in FIG. 11; and

FIGS. 13A and 13B are views useful in explaining a processing method employed in the aforementioned embodiments for determining an appropriate weighting amount.

The embodiments of the invention will be described in detail with reference to the accompanying drawings.

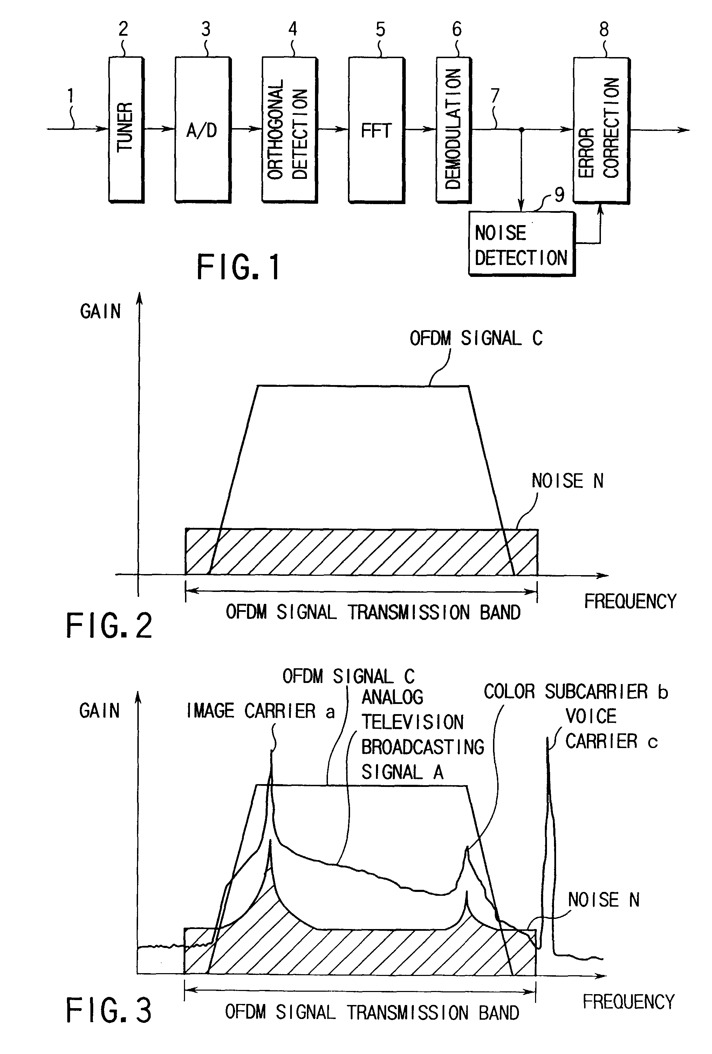

FIG. 1 is a block diagram illustrating the structure of an OFDM receiving system that incorporates an error correcting apparatus according to the invention. In FIG. 1, a transmission signal 1 is an OFDM signal received through an antenna (not shown) or transmitted through a cable (not shown). The transmission signal 1 is tuned in by a tuner 2 and converted into a digital signal by an A/D converter circuit 3. Subsequently, the signal is supplied to an orthogonal detecting section 4, where it is subjected to semi-synchronism orthogonal detection. As a result, the signal is converted into a base band signal and supplied to an FFT section 5. The FFT section 5 converts an input time-domain signal into a frequency-domain signal by FFT processing. An FFT processing output as information indicative of the phase and amplitude of each carrier of the OFDM signal is supplied to a demodulating section 6.

The demodulating section 6 performs synchronism detection or delay detection. In the case of synchronism detection, the fact is used that a pilot signal as a reference signal is cyclically inserted on the transmission side along frequency and time axes. The pilot signal is extracted and compared with a reference value to thereby detect an error component of each carrier and equalize the amplitudes and phases of the carriers (since the pilot signal is inserted intermittently along the frequency and time axes, the reference signal is obtained by interpolating the pilot signal along each axis, and equalization is performed on the basis of the reference signal). In the case of delay detection, the detection can be performed, without carrier reproduction, by calculating the real part and the imaginary part of each of symbols immediately before and after a target symbol. In other words, neither the pilot signal nor equalization is necessary.

A signal 7 (hereinafter referred to as "demodulated data") obtained by equalization in the synchronism detection or obtained in the delay detection is supplied to an error correcting section 8 and a noise detecting section, which constitute an error correcting apparatus according to the invention. The noise detecting section 9 detects multipass noise, spurious noise or noise due to an identical or co-channel, and supplies the error correcting section 8 with noise detection information indicative of the position along the frequency axis, in which the noise occurs, and also indicative of the level of the noise. The error correcting section 8 performs weighting processing on a signal after detection, on the basis of the noise detection information from the noise detecting section 9, and outputs a signal obtained after error correction such as erasure decoding. The weighting processing may be performed by the noise detecting section 9.

The operation of the error correcting apparatus of the invention will now be described using an example of noise.

First, a description will be given of a case where a digital broadcasting band for carrying an OFDM signal with a spectrum as shown in FIG. 2 is interfered with by an analog television broadcasting signal having a spectrum as shown in FIG. 3. In FIG. 2, reference letter C indicates the OFDM signal, and reference letter N the spectrum of noise (Gaussian noise). In FIG. 3, reference letter $\underline{a}$ indicates an image carrier, reference letter $\underline{b}$ a color subcarrier, and reference letter $\underline{c}$ a voice carrier. It is supposed in this case that the image carrier $\underline{a}$ and the color subcarrier $\underline{b}$ overlap with the OFDM transmission band, and the voice carrier $\underline{c}$ is close to the OFDM transmission band.

Where as is shown in FIG. 3, the channel of an analog signal as noise overlaps with the OFDM transmission band, part of the OFDM transmission band is interfered with the analog signal, with the result that a high level noise is applied to each carrier in that part, as well as thermal noise (Gaussian noise), and demodulated data carried by each carrier will have a great error.

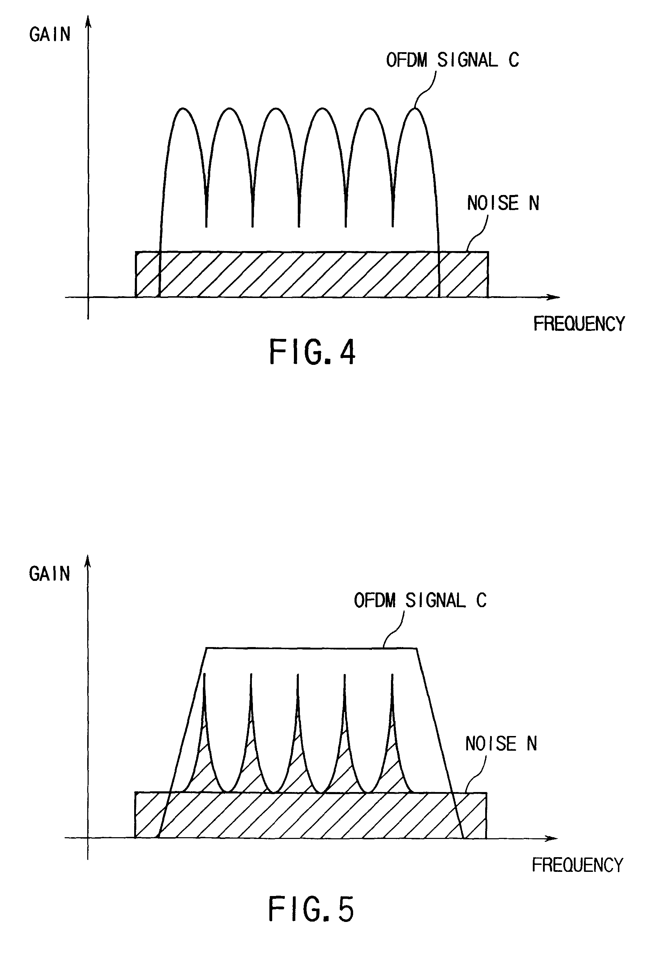

Further, where a multipass exists on the transmission line, the amplitude of the received OFDM signal has dips at regular frequency intervals as shown in FIG. 4. Although in this case, the received OFDM signal is returned to its original spectrum by performing equalization during synchronism detection using a pilot signal, or by delay detection, the C/N value will substantially degrade as a result of the equalization of the reduced gain and as a result of according increase of the noise level. This being so, the demodulated data of the carriers will greatly disperse and therefore have different C/N values, as is understood from FIG. 5.

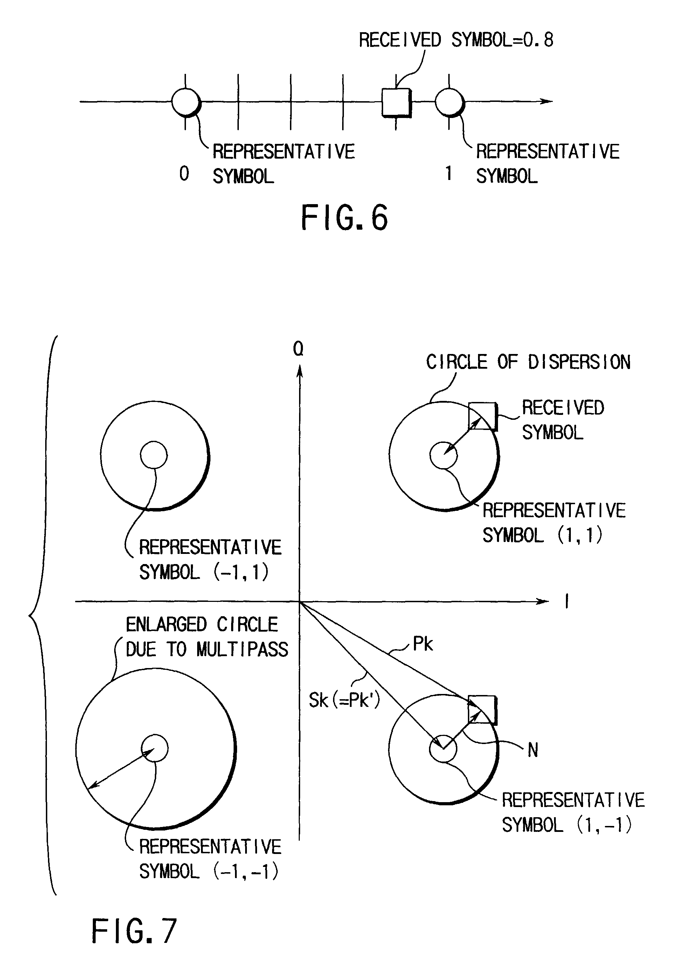

To perform demodulation, there are two methods -- a hard-decision decoding method for performing decoding with a representative symbol close to a received symbol (demodulated data) considered the received symbol, and a soft-decision decoding method for gradually measuring a symbol-received point using, for example, a distance between the received symbol and the representative symbol. FIG. 6 shows an example of the latter method. In this case, the received symbol is soft-determined to be 0.8 from the distance between itself and each of representative symbols 0 and 1.

Concerning the error correcting process, there is a method called "erasure decoding" which is used when received information has a low reliability, and in which correction is performed without making much of the information. In this "erasure decoding" method, correction is performed with the weight of the low-reliability information reduced, and hence is more advantageous than doing correction with the low-reliable information maintained as it is, in that the entire correction level can be enhanced.

The present invention is characterized in that the reliability degree of demodulated data of each carrier is determined by the noise detecting section 9 using the above-described soft-decision method and the erasure decoding method, thereby selectively weighting the demodulated data of each carrier in accordance with the degree of its reliability, and enhancing, at maximum, the correction level of the correcting section 8 and the characteristics of the demodulated data.

Specifically, in the noise detecting section 9, a symbol obtained after equalization is considered a symbol received at a point closest to a representative symbol point (hard-decision), and the difference (Euclidean distance) between the closest point and the representative symbol point is calculated. The dispersion value of the demodulated data of each carrier can be obtained by integrating the difference along the time axis. FIG. 7 shows states of dispersion. In FIG. 7, a received symbol (demodulated data) disperses around a target symbol point (representative symbol point) because of the influence of noise (the dispersion value indicates the radius of a circle around the point). As is evident from the figure, the radius of dispersion is relatively small when the noise is Gaussian noise, whereas when the C/N value of a particular carrier is degraded by a multipass, the radius of dispersion increases. In light of this, the radius of dispersion for each carrier is obtained and considered a dispersion value, and this dispersion value is used as the degree of reliability in weighting processing of demodulation results.

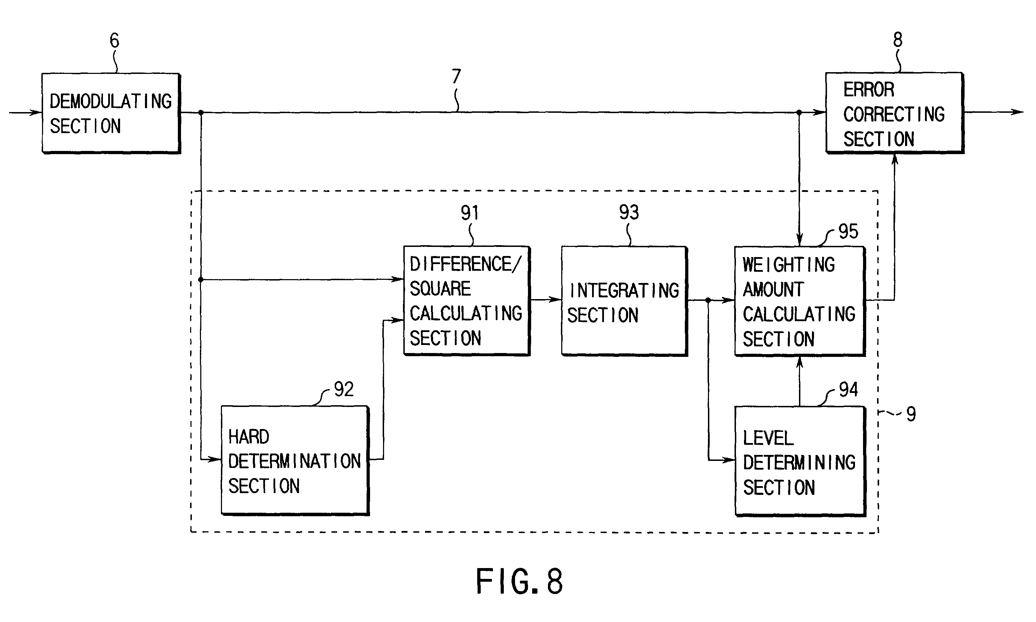

FIG. 8 shows a specific structure of the noise detecting section 9 for realizing the above processing. Demodulated data supplied from the demodulating section 8 is input to a difference/square calculating section 91 and a hard-decision section 92. As aforementioned, the hard-decision section 92 subjects demodulated data to hard-decision, and supplies the determination result to the difference/square calculating section 91. The difference/square calculating section 91 calculates the difference between the demodulated data from the demodulating section 8 and the data from the hard-decision section 92, and their square sum, thereby calculating the Euclidean distance between the data items. The calculated Euclidean distance data is supplied to an integrating section 93, where integration of input data is performed for each of all carriers, or for each of some of them, at regular time intervals. The integration result is supplied as the aforementioned dispersion value to a level determining section 94 and a weighting amount calculating section 95.

The level determining section 94 determines the level of the dispersion value output from the integrating section 93, thereby detecting the C/N value of each carrier, determining, from the C/N value, which carrier includes noise, and determining which carrier's demodulated data should be weighted. The determination result is supplied to the weighting amount calculating section 95. The weighting amount calculating section 95 fetches present demodulated data, and determines which carrier should be weighted and how much it should be weighted, on the basis of the dispersion value of each carrier from the integrating section 93 and the determination result of the level determining section 94. The weighting amount information indicative of the reliability degree of each demodulated data item is supplied to the error correcting section 8.

The error correcting section 8 performs a soft-decision after weighting processing in which input demodulated data is multiplied by a correspondingly input weighting amount, and then performs error correction on the basis of the soft-decision.

In the FIG. 8 structure, Euclidean distance data obtained between demodulated data and data after the soft-decision is integrated. Referring then to FIG. 7, a description will be given of how the integration result corresponds to the dispersion value.

Supposing that Sk represents the vector of a transmission symbol on a carrier k, N noise, and Pk a received symbol, the following expression is given:

$$Pk = Sk + N$$

In FIG. 7, the minimum distance (1, 1) - (1, -1) between representative symbols is 2, and if the level of the noise does not exceed the distance between the symbols, the soft-decision result Pk' corresponds to the transmission symbol. In other words, the noise component is expressed by

$$N = Pk - Sk$$

Therefore, if Pk' = Sk, the following equation is given

$$N = Pk - Pk'$$

Thus, the noise component can be expressed as the difference (Euclidean distance) between the soft-decision result and the demodulated data. Further, since the noise N varies every moment, and its direction is expressed using random numbers, the power of the noise can be estimated as a dispersion value as a result of integration.

When a particular carrier is interrupted by frequency selective noise, such as noise due to interference by an identical or co-channel, multipass noise or spurious noise, its gain changes greatly but its amplitude is returned to a normal value by equalization. However, the C/N value of the carrier degrades as a result of the equalization, and hence the dispersion value becomes high as shown in FIG. 7. In light of this, concerning the dispersion values along the frequency axis, it is understood that a high dispersion value is caused by frequency selective noise. Further, the dispersion value corresponds to the reliability degree of demodulated data. Therefore, it is determined from the dispersion value which carrier is interrupted by frequency selective noise, thereby weighting demodulated data of the carrier in accordance with the dispersion value. As a result, erasure decoding can be performed efficiently.

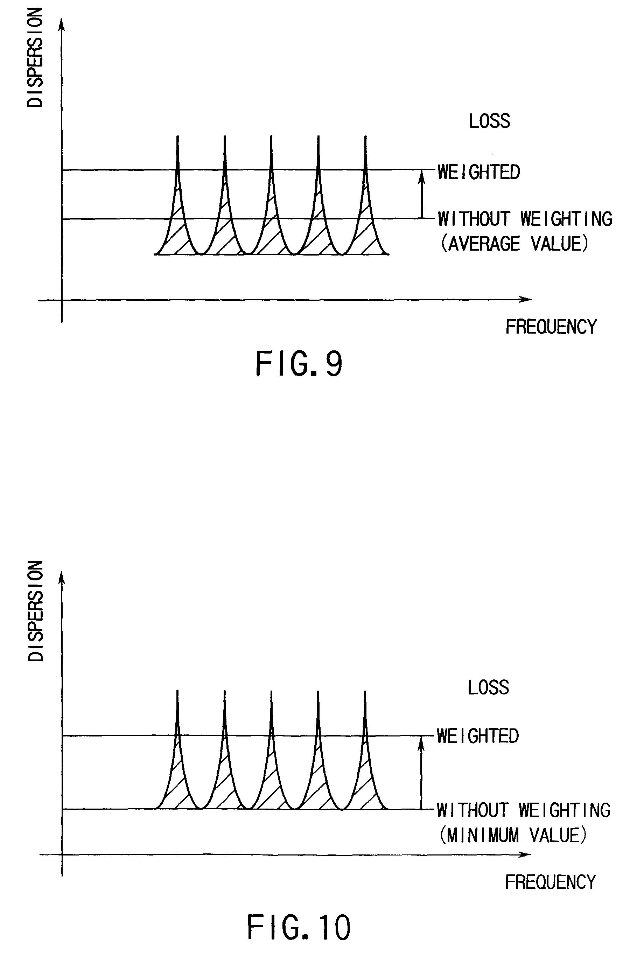

Referring then to FIG. 9, a method for detecting noise and correcting an error will be described. An average value of dispersion is obtained and set as a threshold level without any weight. Then, a carrier which shows a dispersion value higher than the threshold level is detected, and the reliability degree of the detected carrier is determined on the basis of the dispersion value. On the basis of the determination result, the demodulated data of the detected carrier is weighted, thereby making the soft-decision level of the data approach the representative symbol to adjust the degree of contribution to the error correction.

The threshold level may be set at a minimum value as shown in FIG. 10. Alternatively, the level may be set at a value between the average dispersion value and the minimum value. In addition to the above method, there is a method for performing peak detection and determining that a peak-detected portion is interrupted by frequency selective noise, a method for obtaining a dispersion value for each carrier and determining frequency selective noise from the dispersion value, or a method for obtaining a difference between each pair of adjacent carriers and determining that a portion at which the difference abruptly increases is interrupted by frequency selective noise.

Also, in the case of noise due to an identical or co-channel of an analog television broadcasting, the spectrum and the frequency of the noise is known in advance. Accordingly, the noise carrier of the analog broadcasting can be detected precisely by the pattern analysis of the dispersion result, and hence appropriate weighting can be performed. Moreover, a better effect can be obtained by combining those methods or selectively using them in accordance with the situation.

Furthermore, since analog noise has a prominent level, the influence of the analog noise upon the entire noise can be suppressed by ignoring it before the noise correction.

The weighting is performed gradually in accordance with a dispersion value. However, it is not always necessary to change the weighting amount linearly. The amount may be changed using logarithms or functions. It is more effective to set different control amounts between different modulation systems.

Even when there is no pilot signal as in differential encoding - delay detection, the above-described processing enables determination of the noise level from a received signal, and hence enables effective erasure decoding and weighting correction.

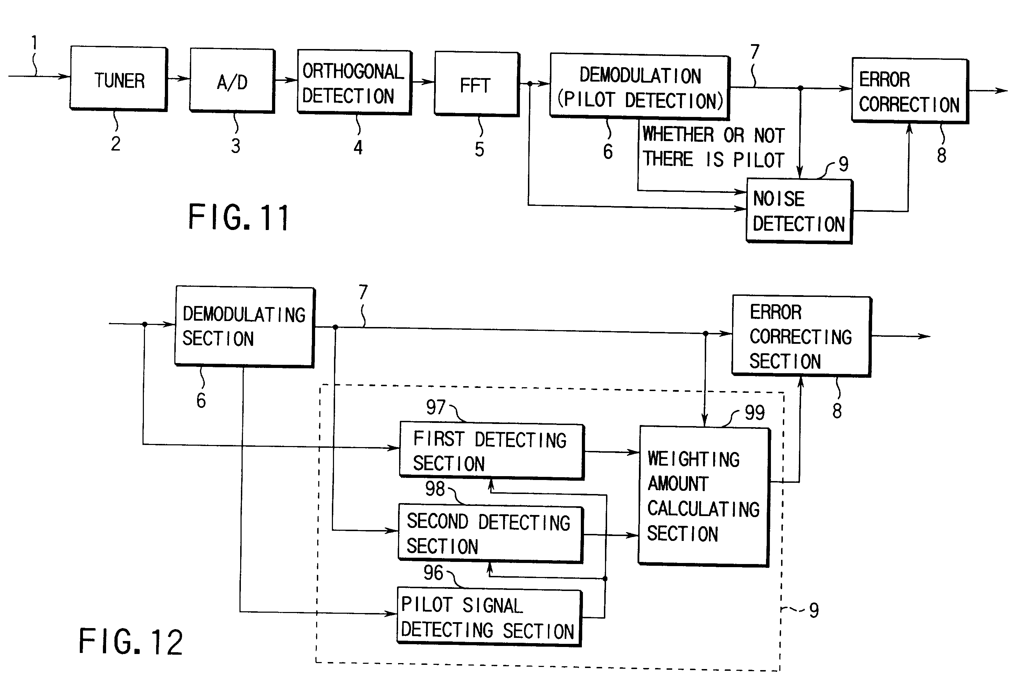

Where both synchronism detection using a pilot signal and delay detection using no pilot signal are performed in a transmission system called hierarchical transmission, in which different modulation methods are employed for different frequencies, whether or not there is a pilot signal is informed of from the demodulating section 6 to the noise detecting section 9 as shown in FIG. 11. Thus, the dispersion value of each carrier is obtained by appropriately switching the detection methods. More specifically, where there is a pilot signal, it is highly possible that the pilot signal has a known amplitude larger than a carrier signal, and hence that detection using the pilot signal will be more effective in enhancing the characteristics of demodulated data. In light of this, a higher effect can be obtained by appropriately switching the detection methods on the basis of whether or not the pilot signal is used, to thereby calculate carrier dispersion.

FIG. 12 shows the structure of a noise detecting section 9 employed in this case. In FIG. 12, reference numeral 96 denotes a pilot signal determining section for determining whether or not a pilot signal is inserted in each carrier. The determination result of the pilot signal determining section 96 is supplied to first and second detecting sections 97 and 98.

When the pilot signal determining section 96 has determined that there is no pilot signal, the first detecting section 97 extracts the pilot signal from the FFT-processed output of the FFT section 5, detects the carrier that is interrupted by noise, from the amplitude level of the pilot signal, and obtains the dispersion value of demodulated data of the detected carrier. The second detecting section 98 has the same structure as that of the combination the difference/square-sum calculating section 91, the hard-decision section 92, the integrating section 93 and the level determining section 94 shown in FIG. 8. When the pilot signal determining section 96 has determined that there is no pilot signal, the second detecting section 98 measures the distance between demodulated data from the demodulating section 6 and a representative received symbol in each carrier, thereby integrating the distances along the time axis to thereby obtain the dispersion value of the demodulated data of each carrier, detecting the C/N value of each carrier from a corresponding dispersion value, and detecting the carrier with frequency selective noise from the C/N value detection results.

The detection results and dispersion values of the first and second detecting sections 97 and 98 are supplied to the weighting amount calculating section 99. The weighting amount calculating section 99 fetches present demodulated data, and calculates the amount of weighting to be applied to the fetched demodulated data of each carrier on the basis of a corresponding detection result and dispersion value output from the first and second detecting sections 97 and 98. This weighting amount information indicative of the reliability degree of each demodulated data item is supplied to the error correcting section 8.

The above-described structure enables optimal noise detection even when both a signal to be detected by synchronism detection using a pilot signal, and a signal to be detected by delay detection using no pilot signal are transmitted.

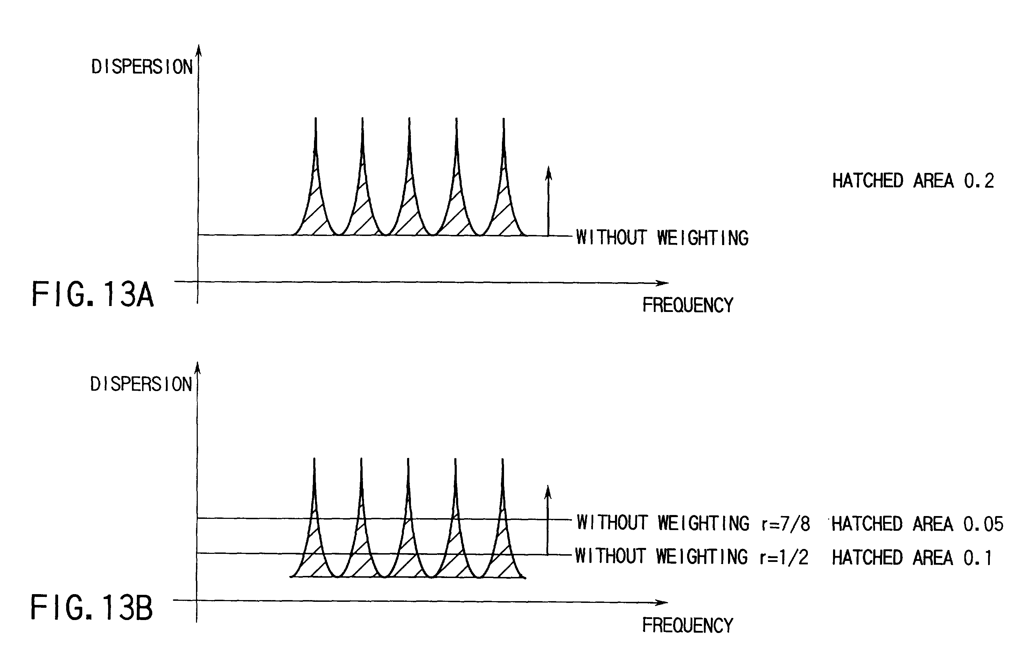

When the amount contributing to correction is changed by performing weighting on the basis of detection results of dispersion, if the changed amount is too much, no correction may be performed. Since the weighting amount (which corresponds to the hatched area of FIG. 13A) is determined from a value obtained by integrating reliability information along the frequency axis (it should be noted that integration is performed along the time axis at a portion at which dispersion detection is performed), the weighting amount based on each detection result of dispersion is reduced if it is determined too much from the value obtained by the integration.

Whether or not the weighting amount disables the correction depends upon the intensity of error correction, i.e. the rate of encoding. From this, the amount of weighting can be reduced by using the encoding rate as a reference value. Specifically, if as is shown in FIG. 13B, the weighting amount (which corresponds to the hatched area) is, for example, 0.2, the threshold value is changed so that the weighting amount will be reduced to 0.1. Further, if the encoding rate $r = 1/2$, the weighting amount is changed from 0.2 to 0.1, whereas if $r = 7/8$, the weighting amount is reduced to 0.05. As a result, excessive erasure decoding and/or an entire correction unable state can be avoided.

Although in the above-described embodiment, the invention is applied to the OFDM receiving apparatus, it is also applicable to another type receiving apparatus for receiving a frequency-division multiplex signal, which may be interrupted by similar frequency selective noise.

As described above, the invention can provide an error correcting apparatus for use in a system for receiving a frequency-division multiplex signal, which can perform effective error correction even when there is frequency selective noise, thereby enhancing the characteristics of the receiving system.

**Claims**

1. An error correcting apparatus for use in a receiving system which receives a frequency-division multiplex transmission signal obtained by modulating a plurality of carriers with different frequencies generated in a transmission band, using information signals assigned to the carriers, the system then subjecting the transmission signal to orthogonal detection, and demodulating, from an orthogonal detection output, the information signals assigned to the carriers, the error correcting apparatus subjecting the demodulated information signals to error correction, comprising:

   noise detecting means (9) for measuring a distance between each demodulated information signal assigned to a corresponding one of the carriers and a corresponding representative received symbol, integrating the demodulated information signal along a time axis to calculate a degree of dispersion of the demodulated information signal, detecting a C/N value of each carrier from the degree of dispersion, detecting, from C/N detection results, the one of the carriers which is interrupted by frequency selective noise, and determining, from the degree of dispersion, a degree of reliability of the demodulated information signal of said one of the carriers; and
   error correcting means (8) for performing soft-decision in which the demodulated information signals of the carries are weighted gradually on the basis of reliability determination results of the noise detecting means, and performing error correction on the basis of a soft-decision result.

2. An error correcting apparatus for use in a receiving system which receives a frequency-division multiplex transmission signal obtained by modulating a plurality of carriers with different frequencies generated in a transmission band, using information signals assigned to the carriers and including known pilot signals, the system then subjecting the transmission signal to orthogonal detection, and demodulating, from an orthogonal detection output, the information signals assigned to the carriers and including the known pilot signals, the error correcting apparatus subjecting the demodulated information signals to error correction, comprising:

   noise detecting means (9) for extracting the pilot signals from the demodulated information signals of the carriers, detecting, from amplitude levels of the pilot signals, the one of the carriers which is interrupted by frequency selective noise, calculating a degree of dispersion of the demodulated information signal of said one of the carriers, and determining, from the degree of dispersion, a degree of reliability of the demodulated information signal of said one of the carriers; and

error correcting means (8) for performing soft-decision in which the demodulated information signals of the carries are weighted gradually on the basis of reliability determination results of the noise detecting means, and performing error correction on the basis of a soft-decision result.

3. An error correcting apparatus according to claim 1, characterized in that when the information signals to be transmitted by the frequency-division multiplex transmission signal selectively include a known pilot signal, the noise detecting means (9) comprises:

pilot signal determining means (96) for determining whether or not each of the carriers includes the pilot signal;

first detecting means (97) for extracting the pilot signal when the pilot signal determining means has determined that there is the pilot signal, and determining, from an amplitude level of the pilot signal, whether or not the one of the carriers which includes the pilot signal is interrupted by noise; and

second detecting means (98) for measuring a distance between the demodulated information signal of each of the carriers and a corresponding representative received symbol, integrating the demodulated information signal along a time axis to calculate a degree of dispersion of the demodulated information signal, detecting a C/N value of said each carrier from the degree of dispersion, and detecting, from C/N detection results, the one of the carriers which is interrupted by frequency selective noise, when the pilot signal determining means has determined that there is no pilot signal, and

a degree of reliability of the demodulated information signal of said one of the carriers detected by the first and second detecting means is determined from the degree of dispersion.

4. An error correcting apparatus according to claim 1, characterized in that when it is known in advance that a band of an analog television signal overlaps with the transmission band of the frequency-division multiplex signal, the noise detecting means (9) designates the one of the carriers which is included in the overlapping transmission band, calculates a degree of dispersion of the demodulated information signal of said one of the carriers, and determines, from the degree of dispersion, a degree of reliability of the demodulated information signal of said one carrier.

5. An error correcting apparatus according to claim 1, characterized in that the noise detecting means (9) calculates an average value of dispersion along a frequency axis, and the error correcting means (8) performs gradual erasure decoding on the one of the demodulated information signals which has a degree of dispersion higher than the average value.

6. An error correcting apparatus according to claim 1, characterized in that the noise detecting means (9) calculates a minimum value of dispersion along a frequency axis, and the error correcting means (8) performs gradual erasure decoding on the one of the demodulated information signals which has a degree of dispersion higher than the minimum value.

7. An error correcting apparatus according to claim 5 or 6, characterized in that when performing the erasure decoding based on the degree of dispersion, the error correcting means (8) controls an amount of erasure so that the amount of erasure will not exceed a predetermined rate.

8. An error correcting apparatus according to claim 7, characterized in that when controlling the amount of erasure so that the amount of erasure will not exceed the predetermined rate, the error correcting means (8) controls the predetermined rate using an encoding rate of the information signal of a corresponding carrier.

FIG. 1

FIG. 2

FIG. 3

GAIN

OFDM SIGNAL C

NOISE N

FREQUENCY

## FIG. 4

GAIN

OFDM SIGNAL C

NOISE N

FREQUENCY

## FIG. 5

RECEIVED SYMBOL=0.8

REPRESENTATIVE
0 SYMBOL

REPRESENTATIVE
1 SYMBOL

## FIG. 6

CIRCLE OF DISPERSION

RECEIVED
SYMBOL

REPRESENTATIVE
SYMBOL (1, 1)

REPRESENTATIVE
SYMBOL (−1, 1)

Q

I

ENLARGED CIRCLE
DUE TO MULTIPASS

Pk

Sk (=Pk')

N

REPRESENTATIVE
SYMBOL (−1, −1)

REPRESENTATIVE
SYMBOL (1, −1)

## FIG. 7

FIG. 8

FIG. 9

FIG. 10

EP 0 963 086 A2

## FIG. 11

```
1 →  TUNER  →  A/D  →  ORTHOGONAL    →  FFT  →  DEMODULATION         →  ERROR
         2       3      DETECTION         5      (PILOT DETECTION)        CORRECTION
                        4                         6          7            8

                                                  WHETHER OR NOT
                                                  THERE IS PILOT

                                                        NOISE  9
                                                        DETECTION
```

## FIG. 12

```
→ DEMODULATING              7                          ERROR
  SECTION                                              CORRECTING
  6                                                    SECTION
                                                       8

                    FIRST DETECTING     97
                    SECTION                    WEIGHTING      99
                                               AMOUNT
                    98                         CALCULATING
                    SECOND DETECTING           SECTION
                    SECTION

                    96
                    PILOT SIGNAL
                    DETECTING SECTION                          9
```

FIG. 13A

FIG. 13B